# FASCICULE DE BREVET EUROPEEN

(11) **EP 3 921 547 B1**
(45) Date de publication et mention de la délivrance du brevet: **13.03.2024**
(21) Numéro de dépôt: 20700299.9
(22) Date de dépôt: 14.01.2020
(51) Int. Cl.: F04D 25/02, F04D 25/06, F04D 29/62, H02K 1/27

(54) **DISPOSITIF DE COMPRESSION D'UN FLUIDE ENTRAINE PAR UNE MACHINE ELECTRIQUE AVEC ROTOR EQUIPE D'UN AIMANT CYLINDRIQUE PLEIN**
VORRICHTUNG ZUM VERDICHTEN EINES VON EINER ELEKTRISCHEN MASCHINE ANGETRIEBENEN FLUIDS MIT EINEM ROTOR MIT EINEM MASSIVEN ZYLINDRISCHEN MAGNETEN
DEVICE FOR COMPRESSING A FLUID DRIVEN BY AN ELECTRIC MACHINE WITH A ROTOR EQUIPPED WITH A SOLID CYLINDRICAL MAGNET

(30) Priorité: 04.02.2019 FR 1901073
(43) Date de publication de la demande: 15.12.2021
(73) Titulaire: IFP Energies nouvelles, 92852 Rueil-Malmaison (FR)
(72) Inventeur: LE BERR, Fabrice, 92852 RUEIL-MALMAISON CEDEX (FR); MILOSAVLJEVIC, Misa, 92852 RUEIL-MALMAISON CEDEX (FR); GROSJEAN, Denis, 92852 RUEIL-MALMAISON CEDEX (FR)
(74) Mandataire: IFP Energies nouvelles
(86) Numéro de dépôt international: PCT/EP2020/050744
(87) Numéro de publication internationale: WO 2020/160877

(56) Documents cités:
- EP-A1- 1 995 426
- WO-A1-98/34324
- GB-A- 2 505 454

## Description

### Domaine technique

La présente invention concerne le domaine des dispositifs de compression entraînés par une machine électrique, en particulier l'invention concerne un turbocompresseur entraîné par une machine électrique.

Elle concerne notamment un dispositif pour comprimer un fluide gazeux, ici de l'air, par un compresseur, seul ou associé à une turbine pour former un turbocompresseur, pour ensuite l'envoyer vers tous appareils, et plus particulièrement à l'admission d'un moteur à combustion interne.

En effet, comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion lors d'un besoin d'une forte puissance. Cette opération, appelée suralimentation, peut être réalisée par tous moyens, tel qu'un compresseur seul entraîné électriquement par une machine électrique (compresseur électrifié), ou par un compresseur associé à une turbine et à une machine électrique pour former un turbocompresseur électrifié.

### Technique antérieure

Dans les deux cas précités, la machine électrique associée au compresseur peut être de différents types.

L'un de ces types est une machine électrique à faible entrefer et bobinages proches du rotor qui permet un guidage optimal du flux magnétique et un rendement optimisé. Ce type de machine électrique présente l'avantage d'une certaine compacité, qui peut parfois devenir problématique pour son refroidissement et qui demande l'utilisation d'un système spécifique pour évacuer ses pertes.

Afin de ne pas être intrusif sur l'entrée d'air du compresseur, ce type de machine électrique est classiquement positionné au dos du compresseur dans le cas d'un compresseur électrifié, ou entre le compresseur et la turbine dans le cas d'un turbocompresseur électrifié, et cela malgré la présence d'un environnement thermique défavorable dans ce dernier car proche de la turbine. Généralement, la liaison entre le compresseur, la turbine et la machine électrique est rigide. Ce type de machine peut aussi être positionné côté compresseur mais à une distance relativement éloignée de l'entrée d'air afin de ne pas perturber cette dernière. La liaison entre le compresseur et la machine électrique est alors rigide ou réalisée à l'aide d'un accouplement mécanique ou magnétique.

Ce type de système est mieux décrit dans les brevets US 2014/0373532, US 8,157,543, US 8,882,478, US 2010/0247342, US 6,449,950, US 7,360,361, EP 0 874 953 ou EP 0 912 821.

Un autre de ces types est une machine électrique à fort entrefer (appelée machine à « Air Gap »), dont l'entrefer peut parfois mesurer plusieurs centimètres afin de laisser passer le fluide de travail dans cet entrefer permettant ainsi une intégration au plus proche des systèmes de compression, dans un environnement thermique nettement plus favorable.

Cette disposition de machine électrique présente néanmoins le désavantage de perturber et limiter le passage du flux magnétique entre le rotor et le stator au travers du grand entrefer, ce qui contribue à limiter le rendement intrinsèque de la machine électrique ainsi que ses performances spécifiques (puissance massique et volumique). Les pertes élevées sur ce type de concept obligent aussi à développer un refroidissement spécifique pour évacuer les calories du rotor et du stator ou à limiter les performances spécifiques.

Ce type de machine électrique est notamment décrit dans les brevets EP 1 995 429, US 2013/169074, GB 250 54 54 A ou US 2013/043745.

Un troisième type de machine électrique est une machine à grille statorique, c'est-à-dire une machine électrique ayant un stator ayant des dents statoriques autour desquelles sont montées des bobines, ces dents statoriques étant de grandes dimensions pour permettre un passage du flux d'air. Les machines à grille statorique sont des machines électriques à faible entrefer et bobinages éloignés du rotor. Ce type de machine électrique peut être placé en à l'admission du compresseur. Une telle machine à grille statorique est décrite notamment dans les demandes de brevet WO2013/050577 et FR 3048022.

Une des problématiques de l'électrification des compresseurs concerne la conception du rotor et sa connexion à l'arbre du compresseur. Cette conception est souvent complexe (utilisation de vis), et peu compatible avec un procédé industriel de fabrication en grande série.

La demande de brevet dont le numéro de dépôt est FR 17/61.576 détaille plusieurs structures de rotor électrique et de montage du rotor sur l'arbre d'un turbo compresseur, en rapportant un rotor sur un arbre débouchant côté compresseur. Ces structures sont intéressantes pour intégrer des rotors sur des turbocompresseurs déjà réalisés. Toutefois, ces structures sont la plupart du temps difficilement compatibles avec un procédé industriel de fabrication en grande série, étant donné les tolérances de fabrication et les opérations d'équilibrage nécessaires à réaliser sur le rotor pour arriver à un tel système. De plus, ces solutions nécessitent l'usinage d'un alésage au sein d'un aimant, ce qui est complexe et qui réduit les performances magnétiques de l'aimant.

### Résumé de l'invention

Pour réduire la complexité du procédé de fabrication et d'assemblage et pour être compatible avec un procédé industriel de fabrication en grande série, la présente invention concerne un dispositif de compression entraîné par une machine électrique, pour lequel le rotor comprend un aimant cylindrique et une frette, de préférence amagnétique. Selon l'invention, l'aimant cylindrique est plein (c'est-à-dire sans alésage), et l'aimant cylindrique est fixé sur une pièce support au moyen de la frette, la pièce de support étant fixée sur une extrémité de l'arbre de compression. Ainsi, cette solution ne nécessite aucun alésage de l'aimant cylindrique, ce qui permet de simplifier la fabrication du dispositif de compression, et d'augmenter les performances magnétiques de l'aimant. Par conséquent, les performances de la machine électrique peuvent être augmentées et/ou les dimensions de la machine électrique peuvent être réduites. De plus, le montage du rotor avec l'arbre de compression est simplifié.

L'invention concerne un dispositif de compression d'un fluide entraîné par une machine électrique selon la revendication 1.

Selon un mode de réalisation, ladite pièce de support est fixée avec ledit arbre de compression par une liaison filetée.

Selon un aspect, ladite pièce de support comporte des moyens de manipulation de ladite pièce de support.

Conformément à une mise en oeuvre de l'invention, ladite pièce de support comporte une portion cylindrique insérée dans ladite roue de compression.

Selon une caractéristique, ladite pièce de support comporte une portion cylindrique pour ladite frette.

Avantageusement, ladite frette est réalisée dans un matériau amagnétique, de préférence en titane ou en carbone.

De préférence, ledit rotor comporte une butée amagnétique entre ledit aimant cylindrique et ladite pièce de support.

Selon un aspect, ledit rotor a un diamètre extérieur inférieur ou égal au diamètre du nez de ladite roue de compression.

De manière avantageuse, lequel ledit dispositif de compression est un turbocompresseur associant une turbine et un compresseur, notamment pour un moteur à combustion interne, ou une microturbine.

De préférence, lequel ladite machine électrique est agencée dans l'admission du gaz dudit turbocompresseur.

Selon une option de réalisation, lequel ladite machine électrique est une machine à grille statorique.

De plus, l'invention concerne un procédé de fabrication d'un dispositif de compression entrainé par une machine électrique selon la revendication 12.

En outre, l'invention concerne un procédé de fabrication d'un dispositif de compression entrainé par une machine électrique selon la revendication 13.

### Liste des figures

D'autres caractéristiques et avantages du dispositif et du procédé selon l'invention, apparaîtront à la lecture de la description ci-après d'exemples non limitatifs de réalisations, en se référant à la figure annexée et décrite ci-après.
[Fig 1]

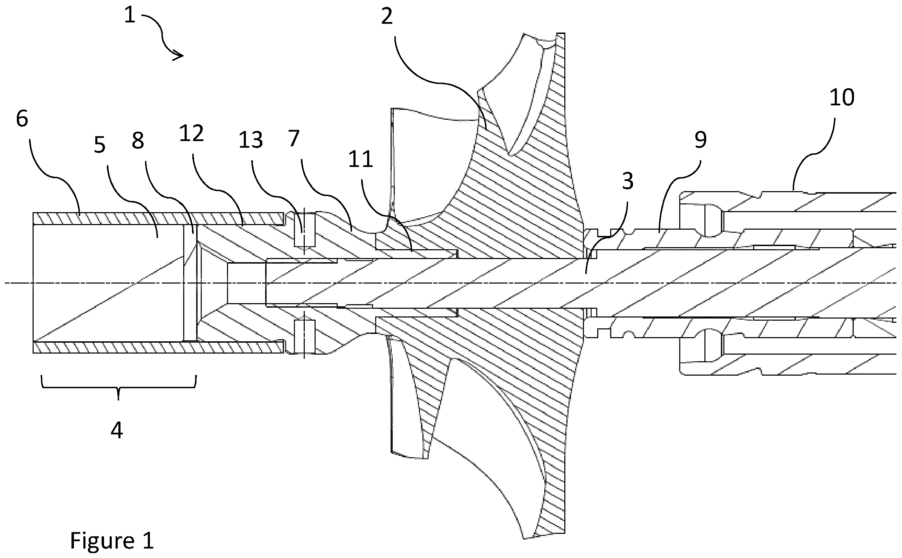

La figure 1 illustre un dispositif de compression selon un mode de réalisation de l'invention.

### Description des modes de réalisation

La présente invention concerne un dispositif de compression d'un fluide, notamment d'un gaz, entraîné par une machine électrique. En d'autres termes, l'invention concerne l'ensemble formé par la machine électrique et le dispositif de compression. De préférence, le dispositif de compression est prévu pour comprimer de l'air.

Le dispositif de compression d'un fluide comprend un arbre, dit arbre de compression, sur lequel est montée une roue de compression (également appelée aube).

La machine électrique comprend un rotor et un stator. Le rotor est lié à l'arbre de compression, au moyen d'une pièce de support, afin de transmettre ou de prélever le couple de la machine électrique à l'arbre de compression et à la roue de compression et inversement. Pour cela, la pièce de support est fixée, d'une part, à une extrémité de l'arbre de compression, et est fixée, d'autre part, au rotor. La pièce de support peut être réalisée en un matériau magnétique ou amagnétique.

Le rotor comporte au moins :
- un aimant cylindrique, l'aimant interagit avec des bobines du stator de manière à créer le mouvement de rotation du rotor, et
- une frette, de préférence en matériau amagnétique, par exemple en titane ou en carbone, pour comprimer l'aimant et retenir axialement l'aimant cylindrique du rotor, la frette peut avoir une forme sensiblement cylindrique enveloppant l'aimant cylindrique. De plus, le matériau amagnétique permet d'éviter les fuites magnétiques.

Selon l'invention, l'aimant cylindrique est une pièce pleine. En d'autres termes, l'aimant cylindrique est un cylindre plein sans trous, alésages ou perçages, etc. Ainsi, cette solution ne nécessite aucune opération d'usinage (par exemple alésage) de l'aimant cylindrique, ce qui permet de simplifier la fabrication du dispositif de compression, et d'augmenter les performances magnétiques de l'aimant (le volume de l'aimant est plus important). Par conséquent, les performances de la machine électrique peuvent être augmentées et/ou les dimensions de la machine électrique peuvent être réduites. De préférence, le rotor selon l'invention peut comporter radialement au maximum les éléments suivants : aimant cylindrique et frette.

De plus, selon l'invention, le rotor est fixé sur la pièce de support au moyen de la frette du rotor. En d'autres termes, la frette cylindrique enveloppe d'une part l'aimant cylindrique et d'autre part une portion de la pièce de support. Ainsi, le montage de l'aimant sur la pièce de support est simplifié. De cette manière, l'assemblage du dispositif de compression et du rotor est simplifié et peut être mis en oeuvre de manière industrielle.

Selon un mode de réalisation de l'invention, la pièce de support peut être fixée sur l'arbre de compression au moyen d'un assemblage filetée. Par exemple, l'extrémité de l'arbre de compression peut comprendre un filetage et la pièce de support peut comprendre un alésage taraudé.

Pour ce mode de réalisation, la pièce de support peut comporter des moyens de préhension/manipulation de la pièce de support, dans le but de faire tourner la pièce de support, et par conséquent pour réaliser la fixation par l'assemblage fileté. Ces moyens de préhension/manipulation peuvent être notamment des orifices pour l'insertion d'outils, des pans pour former un embout de manipulation, etc.

Selon un aspect de l'invention, la pièce de support peut comporter une portion cylindrique insérée dans la roue de compression. Cette portion cylindrique entoure l'arbre de compression et est insérée dans l'alésage de la roue de compression. Cette portion cylindrique assure un centrage long du rotor par rapport à l'arbre de compression, ce qui permet une meilleure coaxialité de l'arbre de compression avec la pièce de support. La portion cylindrique peut avoir un diamètre extérieur réduit par rapport au diamètre extérieur du rotor.

Avantageusement, la portion cylindrique enveloppant l'arbre de compression peut avoir une longueur axiale qui est comprise entre 2 et 3 fois le diamètre de l'arbre de compression, afin de permettre un centrage long optimisé.

Selon une première variante de ce mode de réalisation, la portion cylindrique a une longueur axiale qui correspond sensiblement à la longueur axiale de la roue de compression, afin de permettre un centrage long maximal et de rigidifier la roue de compression, en particulier pour les grandes vitesses de rotation. Cette configuration permet notamment de rigidifier la portion de l'arbre sous la roue compresseur qui peut être un point critique pour certains modes de flexion.

Selon une option de réalisation de l'invention, la pièce de support peut comporter une portion cylindrique destinée au positionnement de la frette. Cette portion cylindrique peut comporter avantageusement un diamètre externe égal au diamètre externe de l'aimant cylindrique.

Pour cette réalisation, la longueur de la frette peut être sensiblement égale au cumul de la longueur de l'aimant cylindrique et de la longueur de la portion cylindrique de la pièce de support destinée au positionnement de la frette.

Selon un aspect de l'invention, le rotor peut comporter en outre une butée amagnétique sur au moins un côté de l'aimant (longitudinalement). Cette butée amagnétique permet d'éviter les fuites magnétiques de l'aimant vers la pièce de support et l'arbre de compression. La butée amagnétique peut aussi jouer le rôle de barrière thermique pour protéger l'aimant sensible à la température.

Par exemple, le rotor peut comporter une butée amagnétique entre la pièce de support et l'aimant cylindrique. La butée amagnétique peut alors avoir sensiblement la forme d'un disque de diamètre égal au diamètre de l'aimant cylindrique. Ainsi, les fuites magnétiques de l'aimant cylindrique vers la pièce de support sont évitées.

Selon une option de réalisation, la longueur de la frette qui enveloppe la pièce de support peut être supérieure à 3 mm pour maintenir suffisamment le rotor.

De plus, la longueur de la frette qui enveloppe la pièce de support peut être inférieure à la longueur de la frette qui enveloppe l'aimant, de manière à limiter l'encombrement axial.

De préférence, la machine électrique peut être montée du côté de l'admission du dispositif de compression.

Selon un mode de réalisation de l'invention, le rotor (en l'occurrence la frette) peut avoir un diamètre extérieur inférieur ou égal au diamètre du nez de la roue de compression. De cette manière, le flux de gaz en entrée du dispositif de compression n'est pas entravé par l'arbre de rotor.

Conformément à une mise en oeuvre de l'invention, le dispositif de compression est un turbocompresseur, notamment pour un moteur à combustion interne d'un véhicule. Il s'agit alors d'un turbocompresseur entraîné par une machine électrique. Dans ce cas, l'arbre de compression correspond à l'arbre du turbocompresseur qui lie la turbine du turbocompresseur au compresseur du turbocompresseur. Ainsi la machine électrique entraîne à la fois le compresseur et la turbine.

Selon une variante de cette mise en oeuvre de l'invention, la machine électrique peut être agencée dans l'admission du gaz (généralement de l'air) du système du turbocompresseur. Cette solution présente un avantage double : la machine électrique peut être refroidie par le flux de gaz d'admission, et le gaz d'admission est chauffé par la machine électrique, ce qui peut être favorable dans certains modes de fonctionnement du moteur à combustion interne.

De préférence, la machine électrique peut être une machine électrique à grille statorique, c'est-à-dire une machine électrique ayant un stator comportant des dents statoriques autour desquelles sont montées des bobines, ces dents statoriques étant de grandes dimensions pour permettre un passage du flux d'air. Une telle machine à grille statorique est décrite notamment dans les demandes de brevet WO2013/050577 et FR 3048022.

La figure 1 illustre, schématiquement et de manière non limitative, un mode de réalisation de l'invention. La figure 1 est une vue en coupe du dispositif de compression 1 entrainé par une machine électrique. Le dispositif de compression 1 comprend un arbre de compression 3 sur lequel est montée une roue de compression 2. L'extrémité de l'arbre de compression 3 est filetée pour le montage et maintien en position d'une pièce de support 7. Le rotor 4 est disposé à l'extrémité de la pièce de support 7. Le rotor 4 est formé par un aimant cylindrique 5 plein (sans alésage) et une frette 6. Le rotor 4 comporte en outre une butée 8 amagnétique et de forme d'un disque. La butée 8 est disposée entre l'aimant cylindrique 5 et la pièce de support 7. La frette 6 enveloppe également une portion cylindrique 12 de la pièce de support 7, afin de lier le rotor 4 et la pièce de support 7. Le diamètre extérieur de la frette 6 est sensiblement égal au diamètre du nez de la roue de compression 2. La frette 6 a une longueur sensiblement égale à la somme de la longueur de l'aimant cylindrique 5 et de la longueur de la portion cylindrique 12 de la pièce de support 7. La pièce de support 7 comporte à son autre extrémité une portion cylindrique 11 de faible diamètre insérée dans la roue de compression 2. De plus, la pièce de support 7 comporte des orifices borgnes 13 destinés à la manipulation de la pièce de support 7 pour sa fixation avec l'arbre de compression 3, notamment au moyen d'outils de manoeuvre (non représentés). D'un côté, la roue de compression 2 est en butée contre la pièce de support 7. De l'autre côté, la roue de compression 2 est en butée contre un système de guidage 9, par exemple la bague intérieure d'un roulement, dont la bague extérieure 10 est représentée.

Des variantes de réalisation de ce mode de réalisation illustré peuvent être envisagées ; par exemple la portion cylindrique 11 peut avoir la longueur de la roue de compression 2, la portion cylindrique 11 peut avoir une longueur supérieure ou égale à la longueur de la roue de compression, la pièce de support 7 peut ne pas comporter de portion cylindrique 11, le rotor peut ne pas comporter de butée amagnétique 8, etc.

En outre, l'invention concerne un procédé de fabrication d'un dispositif de compression entraîné par une machine électrique, ladite machine électrique comprenant un rotor et un stator, et ledit dispositif de compression comprenant un arbre de compression et une roue de compression. Pour ce procédé, on met en oeuvre les étapes suivantes :
a) on fixe l'aimant cylindrique plein sur la pièce de support au moyen d'une frette, qui enveloppe l'aimant cylindrique et au moins une portion de la pièce de support
b) on monte la roue de compression sur l'arbre de compression
c) on fixe la pièce de support sur une extrémité de l'arbre de compression, notamment au moyen d'un assemblage fileté, la pièce de support (7) étant alors fixée, d'une part, à une extrémité de l'arbre de compression (3), et est fixée, d'autre part, au rotor (4).

Alternativement, les étapes du procédé peuvent être les suivantes :
a) on monte la roue de compression sur l'arbre de compression
b) on fixe la pièce de support avec le rotor sur une extrémité de l'arbre de compression, notamment au moyen d'un assemblage fileté ; et l'étape b comportant une sous étape qui est
   i) on fixe l'aimant cylindrique plein sur la pièce de support au moyen d'une frette, qui enveloppe l'aimant cylindrique et au moins une portion de la pièce de support, la pièce de support (7) étant alors fixée, d'une part, à une extrémité de l'arbre de compression (3), et est fixée, d'autre part, au rotor (4).

Avantageusement, le procédé de fabrication peut être destiné à fabriquer un dispositif de compression selon une quelconque des variantes ou des combinaisons des variantes décrites précédemment. Par exemple, le procédé de fabrication peut être prévu pour fabriquer un dispositif de compression tel que décrit en référence à la figure 1.

Pour le mode de réalisation, pour lequel la fixation entre la pièce de support et l'arbre de compression est un assemblage fileté, on peut réaliser cette fixation par rotation de la pièce de support, notamment par un moyen de préhension/manipulation de la pièce de support.

Selon un mode de réalisation, l'étape de montage de la roue de compression sur l'arbre de compression peut comprendre l'insertion d'une portion cylindrique de la pièce de support dans la roue de compression.

Conformément à une mise en oeuvre de l'invention, l'étape de fixation de l'aimant cylindrique sur la pièce support au moyen de la frette peut comprendre l'insertion d'un butée amagnétique entre l'aimant cylindrique et la pièce de support.

Conformément à un mode de réalisation du procédé, l'ensemble dispositif de compression, ou éventuellement turbocompresseur, et machine électrique peut être installé dans une boucle d'air d'un moteur à combustion interne.

Avantageusement, on peut placer la machine électrique dans la conduite d'admission d'air, de sorte que le flux d'air qui entre dans le dispositif de compression traverse d'abord la machine électrique. Cette solution présente un avantage double : la machine électrique peut être refroidie par le flux de gaz d'admission, et le gaz d'admission est chauffé par la machine électrique, ce qui peut être favorable dans certains modes de fonctionnement du moteur à combustion interne.

Le procédé de fabrication peut comporter en outre une étape d'installation du stator autour du rotor.

De manière avantageuse, le procédé de fabrication selon l'invention peut concerner l'électrification d'un dispositif de compression ou d'un turbocompresseur classique (équipé d'une roue de compression et d'un arbre de compression mais initialement sans entraînement électrique). Pour cela, la roue de compression et l'arbre de compression peuvent être une roue et un arbre de compression, pour lequel on réalise les étapes a) à c) décrites ci-dessus.

Dans ce cas, le procédé peut comporter une étape supplémentaire de remplacement de l'arbre de compression, par un arbre de compression plus long.

En outre, l'invention est également adaptée pour les systèmes de production d'énergie tels que les microturbines.

L'invention présente les intérêts fonctionnels suivants, elle permet de :
- Créer un rotor magnétique, permettant la mise en rotation de l'arbre, grâce à la génération d'un champ magnétique tournant par l'intermédiaire d'un stator comportant des bobinages (par exemple triphasés),
- Assurer la tenue mécanique de l'ensemble formant le rotor, notamment vis-à-vis des forces centrifuges qui s'appliquent lors de la mise en rotation, notamment grâce à la frette,
- Garantir de bonnes performances électriques, en termes de puissance mais aussi de rendement, de façon à limiter l'échauffement interne du rotor (et donc la démagnétisation) et simplifier son refroidissement, notamment grâce à l'aimant cylindrique plein,
- Respecter un haut niveau de concentricité entre le rotor électrique et l'arbre du turbocompresseur afin d'obtenir un système mécanique complet (arbre turbocompresseur avec rotor de la machine électrique) équilibrable avec minimum de balourd,
- Présenter une structure compatible avec l'assemblage de la roue compresseur sur l'arbre turbocompresseur,
- Réaliser le serrage de la roue compresseur et précharger les roulements des paliers turbocompresseur, et
- Etre compatible avec un outillage et un procédé de réalisation de turbocompresseur électrique de grande série.

## Revendications

1. Dispositif de compression d'un fluide entraîné par une machine électrique, ladite machine électrique comprenant un rotor (4) et un stator, ledit rotor (4) comprenant un aimant cylindrique (5) et une frette (6), ledit dispositif de compression comprenant un arbre de compression (3) sur lequel est montée au moins une roue de compression (2), et une pièce de support (7) étant fixée à une extrémité dudit arbre de compression (3), ledit aimant cylindrique (5) étant une pièce pleine, **caractérisé en ce que** ledit rotor (4) est fixé sur ladite pièce de support (7) au moyen de ladite frette (6) qui enveloppe au moins une partie de ladite pièce de support (7), la pièce de support (7) étant fixée, d'une part, à une extrémité de l'arbre de compression (3), et est fixée, d'autre part, au rotor (4).

2. Dispositif de compression selon la revendication 1, dans lequel ladite pièce de support (7) est fixée avec ledit arbre de compression (3) par une liaison filetée.

3. Dispositif de compression selon l'une des revendications précédentes, dans lequel ladite pièce de support (7) comporte des moyens de manipulation (13) de ladite pièce de support (7).

4. Dispositif de compression selon l'une des revendications précédentes, dans lequel ladite pièce de support (7) comporte une portion cylindrique (11) insérée dans ladite roue de compression (2).

5. Dispositif de compression selon l'une des revendications précédentes, dans lequel ladite pièce de support (7) comporte une portion cylindrique (12) pour ladite frette (6).

6. Dispositif de compression selon l'une des revendications précédentes, dans lequel ladite frette (6) est réalisée dans un matériau amagnétique, de préférence en titane ou en carbone.

7. Dispositif de compression selon l'une des revendications précédentes, dans lequel ledit rotor (4) comporte une butée amagnétique (8) entre ledit aimant cylindrique (5) et ladite pièce de support (7).

8. Dispositif de compression selon l'une des revendications précédentes, dans lequel ledit rotor (4) a un diamètre extérieur inférieur ou égal au diamètre du nez de ladite roue de compression (2).

9. Dispositif de compression selon l'une des revendications précédentes, dans lequel ledit dispositif de compression (1) est un turbocompresseur associant une turbine et un compresseur, notamment pour un moteur à combustion interne, ou une microturbine.

10. Dispositif de compression selon la revendication 9, dans lequel ladite machine électrique est agencée dans l'admission du gaz dudit turbocompresseur.

11. Dispositif de compression selon l'une des revendications précédentes, dans lequel ladite machine électrique est une machine à grille statorique.

12. Procédé de fabrication d'un dispositif de compression entrainé par une machine électrique, ladite machine électrique comprenant un rotor (4) et un stator, ledit dispositif de compression comprenant un arbre de compression (3) sur lequel est monté au moins une roue de compression (2) et une pièce de support (7), **caractérisé en ce qu'**on réalise les étapes suivantes :
a) on fixe ledit aimant cylindrique plein (5) sur ladite pièce de support (7) au moyen de ladite frette (6), qui enveloppe ledit aimant cylindrique (5) et au moins une portion de ladite pièce de support (7);
b) on monte ladite roue de compression (2) sur ledit arbre de compression (3) ;
c) on fixe ladite pièce de support (7) sur une extrémité dudit arbre de compression (3), notamment au moyen d'un assemblage fileté, la pièce de support (7) étant alors fixée, d'une part, à une extrémité de l'arbre de compression (3), et est fixée, d'autre part, au rotor (4).

13. Procédé de fabrication d'un dispositif de compression entrainé par une machine électrique, ladite machine électrique comprenant un rotor (4) et un stator, ledit dispositif de compression comprenant un arbre de compression (3) sur lequel est monté au moins une roue de compression (2) et une pièce de support (7), **caractérisé en ce qu'**on réalise les étapes suivantes :
a) on monte ladite roue de compression (2) sur ledit arbre de compression (3) ;
b) on fixe ladite pièce de support (7) avec ledit rotor (4) sur une extrémité dudit arbre de compression (3), notamment au moyen d'un assemblage fileté ; et l'étape b) comportant une sous étape qui est :
i) on fixe ledit aimant cylindrique plein (5) sur ladite pièce de support (7) au moyen de ladite frette (6), qui enveloppe ledit aimant cylindrique (5) et au moins une portion de ladite pièce de support (7); la pièce de support (7) étant alors fixée, d'une part, à une extrémité de l'arbre de compression (3), et est fixée, d'autre part, au rotor (4).

## Patentansprüche

1. Vorrichtung zur Verdichtung eines Mediums, die von einer elektrischen Maschine angetrieben wird, wobei die elektrische Maschine einen Rotor (4) und einen Stator umfasst, wobei der Rotor (4) einen zylindrischen Magneten (5) und eine Bandage (6) umfasst, wobei die Vorrichtung zur Verdichtung eine Verdichtungswelle (3) umfasst, auf der mindestens ein Verdichtungsrad (2) montiert ist, und wobei ein Halterungsteil (7) an einem Ende der Verdichtungswelle (3) befestigt ist, wobei der zylindrische Magnet (5) ein massives Teil ist, **dadurch gekennzeichnet, dass** der Rotor (4) an dem Halterungsteil (7) mittels der Bandage (6) befestigt ist, die mindestens einen Teil des Halterungsteils (7) umgibt, wobei das Halterungsteil (7) zum einen an einem Ende der Verdichtungswelle (3) befestigt ist und zum anderen an dem Rotor (4) befestigt ist.

2. Vorrichtung zur Verdichtung nach Anspruch 1, bei der das Halterungsteil (7) an der Verdichtungswelle (3) über eine Gewindeverbindung befestigt ist.

3. Vorrichtung zur Verdichtung nach einem der vorhergehenden Ansprüche, bei der das Halterungsteil (7) Mittel zur Handhabung (13) des Halterungsteils (7) aufweist.

4. Vorrichtung zur Verdichtung nach einem der vorhergehenden Ansprüche, bei der das Halterungsteil (7) einen zylindrischen Abschnitt (11) aufweist, der in das Verdichtungsrad (2) eingeführt ist.

5. Vorrichtung zur Verdichtung nach einem der vorhergehenden Ansprüche, bei der das Halterungsteil (7) einen zylindrischen Abschnitt (12) für die Bandage (6) aufweist.

6. Vorrichtung zur Verdichtung nach einem der vorhergehenden Ansprüche, bei der die Bandage (6) aus einem unmagnetischen Material ausgeführt ist, bevorzugt aus Titan oder aus Kohlenstoff.

7. Vorrichtung zur Verdichtung nach einem der vorhergehenden Ansprüche, bei welcher der Rotor (4) einen unmagnetischen Anschlag (8) zwischen dem zylindrischen Magneten (5) und dem Halterungsteil (7) aufweist.

8. Vorrichtung zur Verdichtung nach einem der vorhergehenden Ansprüche, bei welcher der Rotor (4) einen Außendurchmesser hat, der kleiner als oder gleich dem Durchmesser der Nase des Verdichtungsrades (2) ist.

9. Vorrichtung zur Verdichtung nach einem der vorhergehenden Ansprüche, bei der die Vorrichtung zur Verdichtung (1) ein Turboverdichter ist, der eine Turbine und einen Verdichter kombiniert, insbesondere für eine Brennkraftmaschine, oder eine Mikroturbine.

10. Vorrichtung zur Verdichtung nach Anspruch 9, bei der die elektrische Maschine in dem Gaseinlass des Turboverdichters angeordnet ist.

11. Vorrichtung zur Verdichtung nach einem der vorhergehenden Ansprüche, bei der die elektrische Maschine eine Maschine mit Statorgitter ist.

12. Verfahren zur Herstellung einer Vorrichtung zur Verdichtung, die von einer elektrischen Maschine angetrieben wird, wobei die elektrische Maschine einen Rotor (4) und einen Stator umfasst, wobei die Vorrichtung zur Verdichtung eine Verdichtungswelle (3), auf der mindestens ein Verdichtungsrad (2) montiert ist, und ein Halterungsteil (7) umfasst, **dadurch gekennzeichnet, dass** man die folgenden Schritte ausführt:
a) man befestigt den massiven zylindrischen Magneten (5) an dem Halterungsteil (7) mittels der Bandage (6), die den zylindrischen Magneten (5) und mindestens einen Abschnitt des Halterungsteils (7) umgibt;
b) man montiert das Verdichtungsrad (2) auf der Verdichtungswelle (3);
c) man befestigt das Halterungsteil (7) an einem Ende der Verdichtungswelle (3), insbesondere mittels einer Gewindeverbindung, wobei das Halterungsteil (7) daraufhin zum einen an einem Ende der Verdichtungswelle (3) befestigt ist und zum anderen an dem Rotor (4) befestigt ist.

13. Verfahren zur Herstellung einer Vorrichtung zur Verdichtung, die von einer elektrischen Maschine angetrieben wird, wobei die elektrische Maschine einen Rotor (4) und einen Stator umfasst, wobei die Vorrichtung zur Verdichtung eine Verdichtungswelle (3), auf der mindestens ein Verdichtungsrad (2) montiert ist, und ein Halterungsteil (7) umfasst, **dadurch gekennzeichnet, dass** man die folgenden Schritte ausführt:
a) man montiert das Verdichtungsrad (2) auf der Verdichtungswelle (3);
b) man befestigt das Halterungsteil (7) mit dem Rotor (4) an einem Ende der Verdichtungswelle (3), insbesondere mittels einer Gewindeverbindung; und wobei Schritt b) einen Teilschritt beinhaltet, und zwar:
i) man befestigt den massiven zylindrischen Magneten (5) an dem Halterungsteil (7) mittels der Bandage (6), die den zylindrischen Magneten (5) und mindestens einen Abschnitt des Halterungsteils (7) umgibt; wobei das Halterungsteil (7) daraufhin zum einen an einem Ende der Verdichtungswelle (3) befestigt ist und zum anderen an dem Rotor (4) befestigt ist.

## Claims

1. Fluid compression device driven by an electric machine, said electric machine comprising a rotor (4) and a stator, said rotor (4) comprising a cylindrical magnet (5) and a binding ring (6), said compression device comprising a compression shaft (3) on which at least one compressor wheel (2) is mounted, and a support piece (7) being fastened to one end of said compression shaft (3), said cylindrical magnet (5) being a solid piece, **characterized in that** said rotor (4) is fastened to said support piece (7) by means of said binding ring (6) which surrounds at least part of said support piece (7), the support piece (7) being fastened, for the one part, to one end of the compression shaft (3), and is fastened, for the other part, to the rotor (4).

2. Compression device according to Claim 1, wherein said support piece (7) is fastened to said compression shaft (3) by a threaded connection.

3. Compression device according to one of the preceding claims, wherein said support piece (7) comprises handling means (13) for handling said support piece (7).

4. Compression device according to one of the preceding claims, wherein said support piece (7) comprises a cylindrical portion (11) inserted in said compressor wheel (2).

5. Compression device according to one of the preceding claims, wherein said support piece (7) comprises a cylindrical portion (12) for said binding ring (6).

6. Compression device according to one of the preceding claims, wherein said binding ring (6) is made of a non-magnetic material, preferably titanium or carbon.

7. Compression device according to one of the preceding claims, wherein said rotor (4) comprises a non-magnetic stop (8) between said cylindrical magnet (5) and said support piece (7).

8. Compression device according to one of the preceding claims, wherein the outside diameter of said rotor (4) is less than or equal to the diameter of the nose of said compressor wheel (2).

9. Compression device according to one of the preceding claims, wherein said compression device (1) is a turbocharger combining a turbine and a compressor, notably for an internal combustion engine, or a microturbine.

10. Compression device according to Claim 9, wherein said electric machine is arranged in the gas intake of said turbocharger.

11. Compression device according to one of the preceding claims, wherein said electric machine is a stator grid machine.

12. Method for manufacturing a compression device driven by an electric machine, said electric machine comprising a rotor (4) and a stator, said compression device comprising a compression shaft (3), on which at least one compressor wheel (2) is mounted, and a support piece (7), **characterized in that** the following steps are carried out:
a) fastening said solid cylindrical magnet (5) onto said support piece (7) by means of said binding ring (6) that surrounds said cylindrical magnet (5) and at least a portion of said support piece (7),
b) mounting said compressor wheel (2) onto said compression shaft (3),
c) fastening said support piece (7) onto one end of said compression shaft (3), notably by means of a threaded join, the support part (7) then being fastened, for the one part, to one end of the compression shaft (3), and is fixed, for the other part, to the rotor (4).

13. Method for manufacturing a compression device driven by an electric machine, said electric machine comprising a rotor (4) and a stator, said compression device comprising a compression shaft (3), on which at least one compressor wheel (2) is mounted, and a support piece (7), **characterized in that** the following steps are carried out:
a) mounting said compressor wheel (2) onto said compression shaft (3),
b) fastening said support piece (7) with said rotor (4) onto one end of said compression shaft (3), notably by means of a threaded join, step b) comprising the following sub-step:
i) fastening said solid cylindrical magnet (5) onto said support piece (7) by means of said binding ring (6) that surrounds said cylindrical magnet (5) and at least a portion of said support piece (7); the support piece (7) then being fastened, for the one part, to one end of the compression shaft (3) and is fixed, for the other part, to the rotor (4).
